# EUROPEAN PATENT APPLICATION

(11) **EP 1 869 974 A1**
(43) Date of publication of application: **26.12.2007**
(21) Application number: 07380162.3
(22) Date of filing: 05.06.2007
(51) Int. Cl.: A01K 97/12

(54) **Illuminated warning device for fishing rods**

(30) Priority: 09.06.2006 ES 200601349 U
(71) Applicant: Gomis Bardina, Fernando, 43700 El Vendrell Tarragona (ES); Fernandez Amposta, Maria Teresa, 43700 El Vendrell Tarragona (ES)
(72) Inventor: Gomis Bardina, Fernando, 43700 El Vendrell Tarragona (ES); Fernandez Amposta, Maria Teresa, 43700 El Vendrell Tarragona (ES)
(74) Representative: Carpintero Lopez, Francisco

(57) **Abstract**

An illuminated warning device for fishing rods, which may be affixed to the end of the fishing rod in order to indicate by means of its oscillation the moment of obtaining a bite, comprised of a translucent, hollow body (1), of an elongated shape, which features a first section (1a) of a smaller diameter, closed at its free end, and linked to a second section (1 b) of a greater diameter and open at its base, said body (1) comprising a protrusion (2) and a support (4) from which a light emitting means (5) emerges, prepared to house power supply batteries (7) through a conductive wire (6) which is external to said support (4).

## Description

### Object of the invention

This invention relates to an illuminated warning device for fishing rods, which provides essential innovative characteristics and significant advantages regarding the means which are known and used to this end in the current state of the art.

In particular, the invention proposes the design and development of a warning device envisaged and designed to be removably attached to the distal end of a fishing rod, especially for the practice of fishing during the hours of darkness or with a low level of environmental luminosity, it being possible to switch the device on and off at will, and with the peculiarity that the light emitted is visible through the body of the device itself, with a low light intensity which therefore does not hinder the practice of the aforementioned activity in the least. Power is supplied to the device by means of two small batteries, and the consumption is sufficiently low as to guarantee a long useful life of the batteries used.

The field of application of the invention is included in the industrial sector devoted to the manufacture and marketing of auxiliary sports equipment, and fishing equipment in particular.

### Background and abstract of the invention

Everybody is aware of the existence of a large number of people who are attracted to the sport of fishing, simply as enthusiasts of this sport which they find so relaxing and so pleasurable. Many enthusiasts of this sport prefer to take part in the same during the hours of darkness, whether due to the daytime inclemencies of the environmental conditions of the place where they are situated, or simply because they carry out this activity at the end of their working day and therefore at times when the daylight is either scarce or has disappeared completely.

Under such environmental conditions, in which the user usually tries to secure the rod with the proximal end of the same resting on the ground, or on another supporting surface, while waiting for a bite; it is at this moment when the oscillating movement of the end of the rod is produced, as a consequence of the action exerted by the fish which has been caught in its attempts to free itself; it being necessary for the person fishing to be aware of this process in order to take the rod in his/her hands and thus try to land the prey captured. It is for this reason that, under said conditions of dim environmental light, or the complete absence of the same, it is necessary to be able to count on some warning means which may be noticed beyond doubt by the user, in order to be able to act in consequence.

A number of proposals for warning devices of the type mentioned above are known in the state of the art, emitting both luminous and acoustic signals. These devices, although they fulfil the mission for which they were developed, are not for this reason free from other drawbacks, among which the following are of particular note: regarding the acoustic type, the possibility that the sound may be detected by other fish in the vicinity which, frightened away by the same, avoid their subsequent capture; while the light-emitting devices are envisaged to be provided with small incandescent lamps which, in spite of having a low power consumption, do not prevent the batteries from having a very limited life, frequently giving out precisely when their collaboration is most needed.

Taking into consideration the drawbacks mentioned above, regarding the warning devices of the current state of the art, the primary aim of this invention is the design and development of a warning device which provides effective solutions which allow satisfactory solutions to be found for said drawbacks, in a simple and economical way. This goal has been fully reached by means of the illuminated warning device for fishing rods which is to be the object of the description below, and whose main characteristics are captured in the characterising part of claim 1 attached.

Essentially, the device proposed is structured around a body made of translucent material, preferably an injection-moulded plastic material, with a hollow interior, in the body of which two clearly differentiated cylindrical, longitudinal sections may be noted, the first section being of a smaller diameter and closed at its free end, and a second section of a greater diameter and linked with the first, and open at its free end. The object of the smaller diameter section is simply to house a light emitting source, preferably a light emitting source with a very low power consumption such as, for example, a high-intensity Light Emitting Diode, by means of which not only is the low power consumption desired guaranteed, but also a very long duration of its useful life. Regarding the section of a greater diameter, its purpose is to contain a support for the aforementioned light source, formed by a hollow body from which the light emitting means projects, and inside which the power supply batteries may be housed, preferably two small button-type batteries, arranged in series with one resting against the other; this support contains conductive wires in order to supply the light emitting means with power when said batteries are pressed by the cap which is threaded onto the body and which closes the open end of the aforementioned section of a greater diameter, in such a way that when the user tightens the cap, the force exerted brings about the contact between the batteries and the conductive wires, causing the activation of the light emitting source, a state which is noticeable from the exterior through the material of which the body itself is made. In this way, a slight unscrewing action of the cap is sufficient for said pressure on the batteries to cease and said batteries cease to contact one of the conductive elements of the supporting means, thus bringing about the extinguishing of the light emitting source. The assembly incorporates an external longitudinal protrusion, of a generally semicylindrical shape, and which forms an integral part of the section of the body of the device which is of a greater diameter, for the removable attachment of the device to the fishing rod itself.

As may be understood, a warning device with the characteristics disclosed above is extraordinarily useful, given the simplicity of its design and manufacture, the ease of its attachment to and removal from the fishing rod, and given furthermore the long duration of the working life of the assembly with no need for the replacement of the power supply batteries of the light emitting means.

### Brief description of the drawings

These and other characteristics and advantages of the invention will be revealed more clearly in the detailed description below of a preferred embodiment, given exclusively as an illustrative and non-limitative example, and referring to the attached drawings, in which:
- Figure 1: is a schematic view in perspective of an exploded view of the device of this invention;
- Figure 2: is an elevational view corresponding to a cross-section made along the line A-A in Figure 1;
- Figure 3: is a schematic portrayal, in perspective, of the warning device assembly with its light emitting source activated, and
- Figure 4: is a portrayal equivalent to Figure 3, but with the light of the assembly deactivated.

### Description of a preferred embodiment

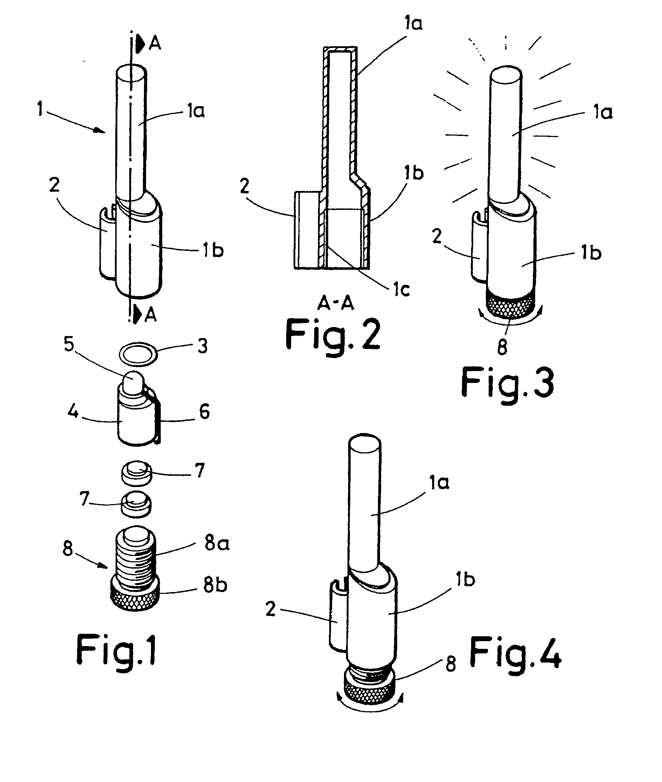

As has been mentioned above, the detailed description of the preferred embodiment of the invention will be stated below, with the help of the attached drawings, in which the same numerical references will be used for the designation of the same or equivalent parts. In this way, considering Figure 1 in the first place, a schematic view in perspective of an exploded view of the light-emitting warning device which is the object of this invention may be seen, in which a body designated with the numerical reference 1 is portrayed; this is produced by the moulding of a translucent material, such as a plastic material or similar; two sections of this body 1 a and 1b may be discerned, generally of a cylindrical shape, both of these substantially elongated and each one being a prolongation of the other; of these, the first section 1 a has a diameter considerably smaller than the other section 1 b. The first section mentioned 1 a is closed at its free end, while the other section 1b, of a greater diameter, is open at its base or free end, it being equipped with an external protrusion 2, which forms an integral part of the body, which extends longitudinally to a length approximately equivalent to that of said section 1 b of a greater diameter, and which in cross-section adopts a generally semicircular shape, open throughout its length. Beneath said body 1 the remainder of the components may be seen; all of these are designed to be housed within the internal space provided by the aforementioned section 1 b of a greater diameter; among them may be seen an O-ring 3, a support 4 for the light emitter 5 on a projection of said support and an electrical supply wire 6 located outside said support in order to make an electrical contact with the battery 7 which occupies the lower position in the interior of the support 4, and the power supply batteries 7 which, as has been stated above, will preferably be two in number and of a small size, of the button type, in order to produce a total power supply of 3 volts. With the elements located in the interior of the housing provided by the section 1 b of the body, the light emitter 5 will be housed in the interior of the section 1 a of a smaller diameter, it being this section which emits the light through the translucent material when the light emitter 5 is activated.

The assembly also includes a closing cap 8 which is applied to the open end of the section of greater diameter 1 b by means of a threaded section 8a; it also comprises an external section 8b of a greater diameter which the user may grasp with his/her fingers in order to carry out the operations of tightening or unscrewing, depending on whether he/she wishes to activate or deactivate the illumination of the light emitting means 5. In this way, the cap 8 acts as a switch, given that its internal end, when tightened, exerts a pressing action on the batteries 7, and causes said batteries to make a connection with the conductive wires which supply said means of illumination 5 with power, while on unscrewing the cap, the pressure exerted on the batteries ceases, and in this way the power supply is disconnected.

Figure 2 portrays an elevational view of a cross-section made along the line A-A on the body 1 of the light-emitting warning device, it being possible to distinguish a threaded section 1c produced on the internal side of the lower part of the section 1 b of a greater diameter, this thread being complementary to that of section 8a of the cap.

The action of lighting and extinguishing described above has been depicted by means of the portrayals in Figures 3 and 4. In both figures, the arrows which appear beside the cap indicate the possibility of turning the cap 8 in both directions. In Figure 3, the aforementioned cap 8 appears tightened completely against section 1 b of the body, acting as a switch in the closed position, and therefore with the means 5 supplied with electricity and emitting light; in contrast, regarding Figure 4, the cap appears in a partially unscrewed position with respect to the section of body 1b, thus acting as a switch in the open position and therefore interrupting the supply of electricity to the light emitter 5; this last being deactivated.

As will be understood, the open semicylindrical shape adopted by the protrusion 2 allows the assembly to be easily affixed to, or removed from, a fishing rod, by means of the mere attachment, or release, of said protrusion 2 to the zone near to the end of said fishing rod.

On the other hand, those skilled in the art will note that although the above description has been made regarding an embodiment which illustrates a particular application, that being a device which is attachable to a fishing rod in order to comprise a light-emitting warning device for when the rod moves due to a bite, this embodiment should under no circumstances be considered to be limitative, as it only represents one possible use and application of the device. Evidently, the device is applicable to any situation in which it may be necessary to have at one's disposal an illuminated warning device, or even a low-power means of illumination.

It is not considered necessary to expand further the content of this description in order that a person skilled in the art may understand its scope and the advantages derived from the invention, nor to develop or to put the object of the same into practice.

However, it should be understood that the invention has been disclosed in accordance with a preferred embodiment of the same, and that it may therefore be subject to modifications, without affecting the basis of this invention in any way; said modifications may affect, in particular, the shape, the size and/or the materials of which the assembly or the component parts of the same are manufactured.

## Claims

1. A light-emitting warning device for fishing rods, attachable to the zone nearest to the end of the rod in order to show the user an oscillation which is associated with the moment at which a bite takes place, this oscillation being noticeable by the user by virtue of the light emitted by the device, this being visible from the exterior, **characterised in that** said device comprises of a body (1) moulded from translucent material, with a hollow interior, of a generally elongated shape, it being possible to discern a first section (1 a), of a smaller diameter, closed at its free end, and a second section (1 b), of a greater diameter, linked with the first and open at its base, said body also comprising a protrusion (2), extending longitudinally adjacent to the aforementioned section of the body (1 b) of a greater diameter; the device also comprising other components gauged to be admitted and housed in the interior of section of the body (1 b) of a greater diameter, among these are a waterproofing O-ring (3), a support (4), from which there emerges a low power consumption light emitting means (5) prepared to house in its interior the power supply batteries (7), arranged in series, intended to supply the aforementioned light emitting means (5) with the assistance of a conductive wire (6) which is external to said support (4).

2. A device as claimed in claim 1, **characterised in that** the aforementioned protrusion (2) presents a generally semicylindrical shape, with a longitudinal opening, and forms a removable fixing means to the fishing rod in a position near to the distal end of the latter.

3. A device as claimed in claims 1 and 2, **characterised in that** the section of the body (1b) of a greater diameter presents a portion at its end (1c) which is threaded internally, starting at its open end, this being to allow the fixing by threading of a section (8a) of a cap (8), intended to act as an on-off switch depending on whether it exerts pressure or not on the aforementioned batteries (7), according to whether it is in a totally or partially tightened state respectively.
